# EUROPEAN PATENT APPLICATION

(11) **EP 3 605 453 A1**
(43) Date of publication of application: **05.02.2020**
(21) Application number: 18187326.6
(22) Date of filing: 03.08.2018
(51) Int. Cl.: G06T 7/00, F03D 80/50

(54) **CONVOLUTIONAL NEURAL NETWORK BASED INSPECTION OF BLADE-DEFECTS OF A WIND TURBINE**

(71) Applicant: Siemens Gamesa Renewable Energy GmbH & Co. KG, 20097 Hamburg (DE); Siemens Gamesa Renewable Energy A/S, 7330 Brande (DK)
(72) Inventor: Bach-Andersen, Martin, 7300 Jelling (DK); Dudfield, Peter, 7400 Herning (DK); Yashchenko, Sergey, 22607 Hamburg (DE)
(74) Representative: Aspacher, Karl-Georg

(57) **Abstract**

A computer-implemented method for determination of blade-defects is automatically carried out by a computing system (CS). In step S1), an image (OI) of a wind turbine containing at least a part of one or more blades of the wind turbine is received by an interface (IF) of the computer system (CS). The image has a given original number of pixels in height and width. A step S2) basically consists of two consecutive steps S2a) and S2b) which are executed by a processing unit (PU )of the computer system (CS). In step S2a), the image (OI) is analyzed to determine an outline of the blades in the image. In step S2b) a modified image (AI) is created from the analyzed image (OI) containing image information of the blades only. Finally, step S3) consists of analyzing, by the processing unit (PU), the modified image (AI) to determine a blade defect (BD) and/or a blade defect type (BDT) of the blades. As a result, the blade defects (BD) and/or blade defect types (BDT) are output by the processing unit (PU).

## Description

The present invention relates to a method and a system for computer-implemented determination of blade-defects of a wind turbine and a computer program product. In particular, the invention relates to the visual inspection of blades of a wind turbine.

Over a period of use, damages to the rotor blades (short: blades) of a wind turbine, such as erosion, occur. To find such blade-defects, a number of high-resolution images is taken, for example, by a drone. Blade defect classification and localization in these images has been done up to now manually by annotators which visually analyze the images one by one. The annotators identify and mark positions of defects in the images. The so gathered information is stored in a database.

A major drawback of manually inspecting a plurality of images is that the detection accuracy sometimes is poor. In addition, the time required for the visual inspection is very high. This can take up to an hour to evaluate an image. As a result, this analysis is not cost-efficient.

Hence, there is a need for an easier method for the determination of blade-defects of a wind turbine.

It is therefore an object of the present invention to provide a method which allows a reliable and easy determination of blade-defects of a wind turbine. It is another object of the present invention to provide a system which allows a reliable and easy determination of blade-defects of a wind turbine.

These objects are solved by a method according to the features of claim 1, a computer program product according to claim 11 and a system according to claim 12. Preferred embodiments are set out in the dependent claims.

According to the invention, a method for computer-implemented determination of blade-defects of a wind turbine is suggested. The method comprises the following steps: S1) receiving, by an interface, an image of a wind turbine containing at least a part of one or more blades of the wind turbine, the image having a given original number of pixels in height and width; S2a) analyzing, by a processing unit, the image to determine an outline of the blades in the image; S2b) creating, by the processing unit, a modified image from the analyzed image containing image information of the blades only; and S3) analyzing, by the processing unit, the modified image to determine a blade defect and/or a blade defect type of the blades.

This invention is based on the consideration that by applying deep learning models a computer-implemented, and therefore automated, determination of blade-defects of a wind turbine is enabled. Therefore, blade inspection takes less time and is more cost efficient. In addition, it does not require skilled image annotators.

The method uses a trained deep learning model that can run automatically on large amount of image data. The cost for annotation can be essentially decreased and quality of image annotation increased with further development of the deep learning models.

A major advantage of the method described is that blade-defect determination may be done on pixel-level which provides a high accuracy.

The method basically consists of the two steps of detecting the outline the blades in an image and creating a modified image which has any irrelevant information removed besides the blades. In other words, result of the first step is a modified image with simplified/reduced information as background information of the image is removed. This simplified image, called modified image, forms the basis for determining blade defects in the second step. This second step allows for gathering further information about the location of the defect as well as a type (also referred to as a class) of the identified defect.

Supervised machine learning models using fully convolutional neural networks (also known as CNNs) may be applied for both, the determination of the blade outline in steps S2a) and S2b) and the blade defect localization and classification in step S3). As known to the skilled person training and testing data is necessary to conduct supervised machine learning models. For training and testing of the models, images with precise annotations are used where the annotations are done manually. To enhance accuracy of the supervised machine learning models, patches of smaller size are produced from the original blade images (i.e. the images that are received at the interface) and used for model training. Implementation, training, testing, and deployment of the models may be made with open source tools.

According to a preferred embodiment, steps S2a) and S2b) are carried out using a convolutional neural network (CNN) being trained with training data of manually annotated images of wind turbines. The annotation may be made with predefined object classes to structure image information. For example, four object classes may be used for annotation: blade, background, the same turbine in background, a different turbine in background. However, it is to be understood that the amount of classes and the content of the classes may be chosen in another way as well.

The CNN may conduct a global model for global image segmentation and a local model for localized refinement of the segmentation from the global model. Both, the global model and the local model may use the same neural network architecture.

The global model enables a rough identification of those parts in the image which show a blade to be assessed. The local model enables finding all those pixels in the image which relate to the blade of the wind turbine to be assessed.

In the global model and the local model, a number of predefined object classes are assigned to pixels or blocks of pixels in the annotated image, wherein the number of object classes relate to relevant and irrelevant image information necessary or not for determining the outline of the blades to be assessed. For example, the above mentioned four object classes may be used for annotation: blade, background, the same turbine in background, a different turbine in background. The predefined object classes may be used in an identical manner in both the global and the local model.

In the global model, during execution of the already trained CNN, the received image is resized to a resized image having a smaller second number of pixels in height and width as the resized image before proceeding to analyze, by a processing unit, the image to determine an outline of the blades in the image (step S2a)). Resizing the received image has the advantage that the amount of data to be processed can be reduced. This helps to speed up the determination of the blade outline.

According to a further preferred embodiment, as an output of the global model to be processed in step S2b), the resized image is annotated with the predefined object classes and up-scaled to the original number of pixels. Up-scaling enables a combination with processing within the local model.

In the local model, the received image and the up-scaled and annotated resized image are combined by execution of the already trained CNN to provide the modified image, which has the image information of the blades in the quality of the received image together with the annotation with the predefined object classes. This high-resolution image enables localization and classification of the blade-defect by means of a further already trained neural network in step S3).

In step S3), another neural network being trained with training data of manually annotated patches of modified images is executed to localize and classify blade-defects. For the development of blade defect classification and localization models, an erosion blade defect type (class) may be selected. A neural network architecture, e.g. an "erosion model" implemented in Keras or, as a further example, an "alternative erosion model" implemented in TensorFlow may be used. Keras and TensorFlow are known neural network tools (See [3] or [4], for example).

In step S3), the modified image may be resized to a resized modified image having a smaller second number of pixels in height and width as the modified image before annotating with a predefined defect class.

As an output, a resized and annotated modified image is up-scaled to the original number of pixels. For model training, the images and annotations are augmented by random flips and random changes in brightness and color saturation. Patches are only taken of the blade area. Images with no erosion are not used for training.

According to a further aspect, a computer program product, directly loadable into the internal memory of a digital computer, comprising software code portions for performing the steps of one of the preceding claims when said product is run on a computer, is suggested. The computer program product may be in the form of a storage medium, such as a DVD, CD-ROM, USB-memory stick, and so on. Alternatively, the computer program product may in the form of a signal which may be transmitted via a wired or wireless communication line.

According to a further aspect, a system for computer-implemented determination of blade-defects of a wind turbine, is suggested. The system comprises an interface for receiving an image of a wind turbine containing at least a part of one or more blades of the wind turbine, the image having a given original number of pixels in height and width, and a processing unit. The processing unit is adapted to analyze the image to determine an outline of the blades in the image. The processing unit is adapted to create a modified image from the analyzed image containing image information of the blades only. Furthermore, the processing unit is adapted to analyze the modified image to determine a blade defect and/or a blade defect type of the blades.

The system has the same advantages as they have been described in accordance with the method described herein.

The invention will be described in more detail by means of the accompanying figures.
- Fig. 1: a received image and an annotated image used for training of a convolutional neural network CNN;
- Fig. 2: a diagram illustrating the two-step process according to the method of the present invention;
- Fig. 3: a received image and a modified image resulting from the first step of the method;
- Fig. 4: a modified image and an annotated image resulting from the second step of the method;
- Fig. 5: a block diagram illustrating a system according to the invention; and
- Fig. 6: a flow chart illustrating the steps according to the method of the invention.

To avoid time consuming and not cost-efficient manual determination of blade-defects of a wind turbine, a method of automatic blade defect classification and localization in images is described below.

The method uses supervised machine learning models using fully convolutional neural networks CNN. CNNs are used for both steps of blade detection and localization (corresponding to finding a blade outline) and removal of the background such that the blade outline remains as only image information in so-called modified images as well as blade defect classification and localization in images with outlined blades and removed background. The step of blade defect classification and localization may be done on pixel level which results in a high accuracy of determined blade-defects.

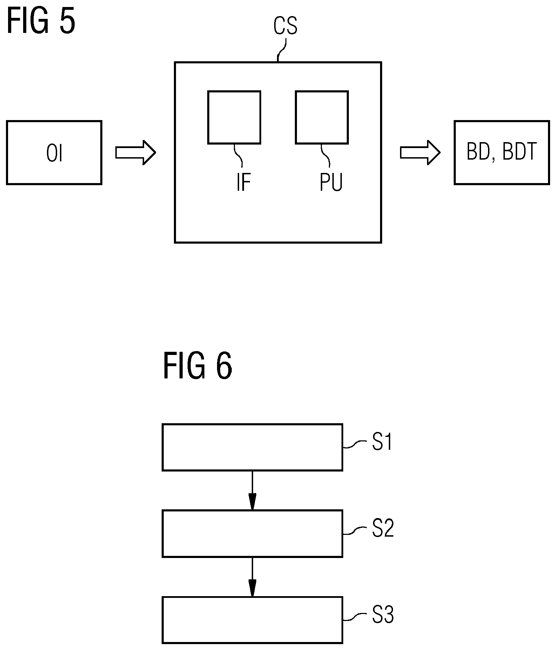

To be able to conduct CNNs, training with suitable training data is necessary. For this purpose, a plurality of images is manually annotated with predefined object classes for training and testing the models. The purpose of annotation with predefined object classes is to structure image information of images received by an interface IF of a computing system CS (Fig. 5). The amount of classes and the content of the classes may be chosen in a suitable manner.

To enhance and speed-up training, patches of smaller size may be produced from original blade images and used for model training. Implementation, training, testing, and deployment of the models may be made with open source tools.

It is known from [1] to use fully CNNs for semantic image segmentation. The method described in [1] allows the detection and localization of objects in images simultaneously at most precise level, i.e. pixel level. A CNN as proposed in [1] may be used as a basis to implement the method as described below.

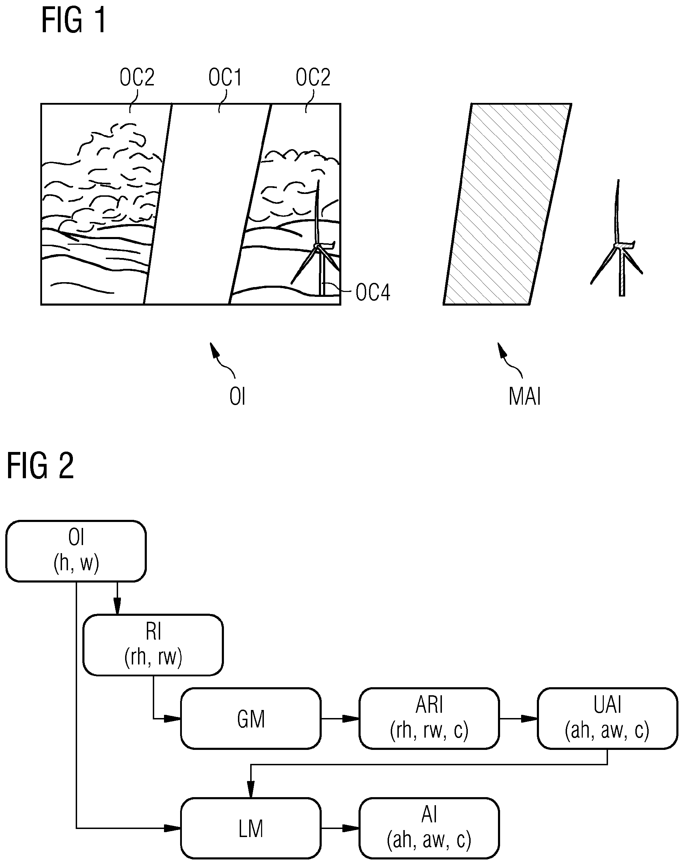

For training of the deep learning models precise blade image annotations are needed. The annotations are prepared manually by annotators. Fig. 1 shows on its left side an example of an image OI as it is taken, e.g. by a drone. Such an "original" image will be referred to as a received image OI which is received by the interface IF of the computing system CS according to the invention (Fig. 6). The original image OI shows, by way of example, a part of a blade (denoted with OC1 according to a predefined first object class) with potential defects of a wind turbine to be assessed (in the middle of the image), background (denoted with OC2 according to a predefined second object class) and another wind turbine (denoted with OC4 according to a predefined forth object class) in the background.

The right side of Fig. 1 shows a manually annotated image MAI of the original image 01. The annotated image MAI has annotations made by colorings according to the predefined object classes. For example, four object classes OC1,..., OC4 may be used for annotation: blade (OC1), background (OC2), the same turbine in background (OC3 - not shown in Fig. 1), a different turbine in background (OC4). However, the amount of classes and the content of the classes may be chosen in another way as well. The annotated image MAI consists of a single-colored outline of the blade (denoted with OC1 according to its belonging to object class OC1) and a single-colored turbine in the background having a different color (denoted with OC4 according to its belonging to object class OC4). The background belonging to object class OC2 is removed.

A plurality of manually annotated images MAI as shown in Fig. 1 is used to train the CNN.

The determination of blade-defects, such as erosion, comprises localization of blade-defects as well as classification of the localized blade-defects. The latter refers to finding a (predefined) type of the localized blade-defect. The below described automated method for detecting and localizing blade-defects of a wind turbine basically consists of two stages, namely the localization of the blade in the received (original) image and the determination of its outline in the image and the localization and classification of blade-defects.

### Determination of the blade outline

The blade outline model is illustrated in Fig. 2 and uses a two-step process. A global model GM serves for a global image segmentation and a local model LM serves for a localized refinement of the segmentation from the global model GM. Both, the global model and the local model use the same neural network architecture. The neural network architecture may be, for example, represented by seven (7) convolution and max pooling blocks and three (3) up-sampling and convolution blocks implemented using PyTorch [3]. After this, the probabilities of the four output classes are calculated and then up-sampled to the original image size.

Training of the global model works as follows. As an input, the global model GM receives the original image OI in a resized size as resized image RI. While the original image OI has a number h of pixels in height and a number w of pixels in width (in short notation: OI(h,w)), the resized image RI has a number rh of pixels in height and a number rw of pixels in width (in short notation: RI(rh,rw)), where rh < h and rw < w. The global model is trained to add annotations to the resized image, resulting in an annotated resized image ARI having the same size as the resized image, i.e. ARI(rw,rh,c), where c denotes the number of predefined object classes OCi used for annotations, where i = 1 ... c. According to the above chosen example is c = 4 as four object classes are used: blade, background, the same turbine in background, a different turbine in background. The annotated resized image ARI together with its annotations is up-scaled, resulting in an up-scaled and annotated image UAI having a number ah of pixels in height and a number aw of pixels in width (in short notation: UAI(ah,aw,c)), where ah = h and aw = w. In other words, the size of the up-scaled and annotated image UAI corresponds to the size of the original image OI or UAI(ah,aw,c) = UAI(h,w,c). For training, augmentation of the images and annotations is made by random flips and random changes in brightness and color saturation. For training purposes, patches of the blade area are considered only. Images with no erosion are not used for training.

After training of the global model GM is finished, the global model is executed as follows: As an input, the local model GM receives the original image OI(h,w) in a resized (downsized) size as resized image RI(rh,rw). As an output, an annotated resized image ARI(rw,rh,c) having the same size as the resized image RI is generated. The annotated resized image ARI(rw,rh,c) is up-scaled (augmented) to the up-scaled and annotated image UAI(ah,aw,c), as shown in Fig. 2. The up-scaled and annotated image UAI(ah,aw,c) = UAI(h,w,c) as well as the original image OI(h,w) will be used as input information in the local model LM.

Training of the local model LM works as follows. As an input, the local model LM receives patches of the original image OI(h,w) in full resolution and their annotations from the up-scaled and annotated image UAI(ah,aw,c) = UAI(h,w,c) provided by the global model GM. The object classes OCi of the annotation are defined the same way as for the global model training. Further, the four probabilities from the output of the global model (UAI (ah,aw,c) in Fig. 2) are used as input. The images and annotations are up-scaled resulting in an annotated image AI(ah,aw,c) having the same size as the original image OI(h,w), i.e. ah = h and aw = w. In other words, the size of the up-scaled and annotated image AI being the output of the local model LM corresponds to the size of the original image OI or AI(ah,aw,c) = AI(h,w,c). For training purposes, patches of the blade area are considered only. Images with no erosion are not used for training.

After training of the global model GM is finished, the global model is executed as follows: As an input, the local model LM receives the original image OI(h,w) in full resolution and the probabilities of their annotations from the up-scaled and annotated image UAI(ah,aw,c) = UAI(h,w,c) provided by the global model GM. As an output, the annotated image AI(ah,aw,c) is provided. Annotations are defined the same way as for the local model training. The annotated image AI constitutes a modified image being the input for further assessment in the next, second step.

### Blade defect classification and localization

For the development of blade defect classification and localization models, an erosion blade defect type is selected. Two different neural network architectures may be utilized, a first model called "erosion model" and an alternative or second model called "alternative erosion model". For example, the erosion model may be implemented in Keras (see [3]) and the alternative erosion model may be implemented in TensorFlow (see [4]).

The erosion model architecture consists of 4 blocks of convolution and max pooling layers and then 4 blocks up-sampling and convolution layers. For training of the neural network, patches POI from original images OI with POI(eh,ew) pixels (eh < h and ew < w) and annotations are resized to POI(reh, rew) pixels (reh > eh and rew > ew) with the removed background. In annotation, predefined blade and defect type (erosion in this case) classes are used.

After training of the erosion model is finished, it is executed as follows: As input, the erosion model receives the original image OI(h,w) which is resized to RMI(rh,rw) pixels. In the resized original image RMI(rh,rw), the background is removed using the information of the modified image AI. The erosion model outputs an up-scaled and annotated image RAMI of the size (h,w), i.e. RAMI(h,w), which results from upscaling RMI(rh,rw).

The alternative erosion model uses a fully convolutional network architecture described in [1] and may be implemented using TensorFlow described in [4]. Two classes are considered: erosion and no erosion that includes background, blades, and other defect types. The alternative erosion model is trained on patches of predetermined pixel size (which is of course smaller than the size of the original image) produced using random positions, random rotations, random horizontal flips and random vertical flips.

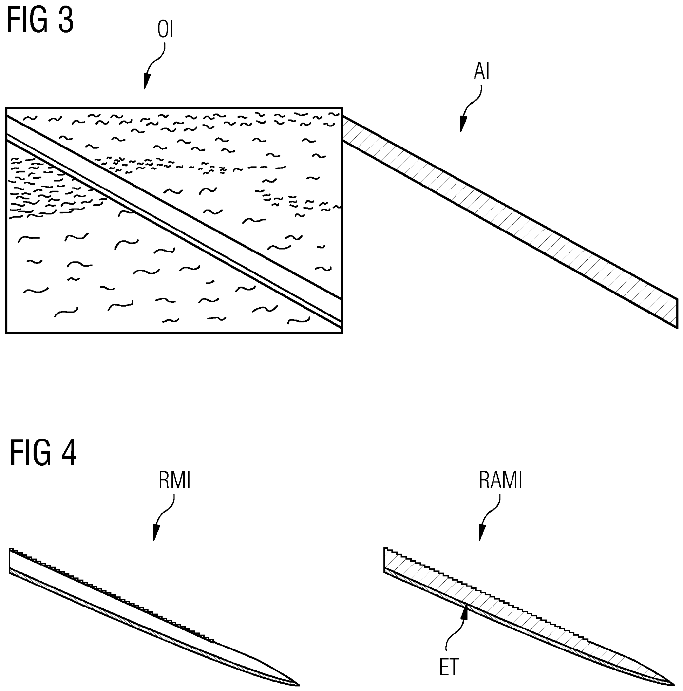

Examples of results of the blade outline model and the erosion model are shown in Figs. 3 and 4, respectively. Fig. 3 shows the results of the blade outline model, in detail the blade image on the left side and the result of the blade outline model on the right side. The blade and its location is clearly identified and visible in the figure. Fig. 4 illustrates the results of the erosion model, wherein the blade image is shown on the left side and the result of the erosion model is shown on the right side. The erosion defect type is identified and marked by a predefined color (which is marked by arrow ET in the figure).

The results of the models performance are presented in Table 1, where TP, FP, and FN are defined as true positives, false positives, and false negatives, respectively. The results demonstrate good performance of the blade outline model as well as both models for erosion blade defect detection and localization.

**Table 1: Results of the models performance**

| **Model** | **TP/(TP+FP+FN)** | **TP** | **FP** |
|---|---|---|---|
| Blade outline | 0.85 | 0.95 | 0.012 |
| Erosion model | 0.44 | 0.65 | 0.07 |
| Alternative erosion model | 0.55 | 0.75 | 0.05 |

Fig. 6 illustrates a flow diagram of the invention described. The method is executed by the computing system CS comprising an interface IF and a processing unit PU and which is illustrated in Fig. 5. The method for determination of blade-defects is carried out computer-implemented by the computing system CS. In step S1) an image OI of a wind turbine containing at least a part of one or more blades of the wind turbine is received by the interface IF of the computer system CS. The image has a given original number of pixels in height and width. Step S2) basically consists of two consecutive steps S2a) and S2b) which are executed by the processing unit PU of the computers system CS. In step S2a) the image is analyzed to determine an outline of the blades in the image. In step S2b) a modified image is created from the analyzed image containing image information of the blades only. Finally, step S3) consists of analyzing, by the processing unit PU, the modified image to determine a blade defect and/or a blade defect type of the blades. As a result, blade defects BD and/or blade defect types BDT are output by the processing unit PU.

Summarizing, the method basically consists of the two steps of detecting the outline of the blades in an image and creating a modified image which has any irrelevant information removed besides the blades. In other words, result of the first step is a modified image with simplified/reduced information as background information of the image is removed. This simplified image, called modified image, forms the basis for determining blade defects in the second step. This second step allows for gathering further information about the location of the defect as well as a type (also referred to as a class) of the identified defect.

The proposed method enables a computer-implemented, and therefore automated, determination of blade-defects of a wind turbine. Therefore, blade inspection takes less time and is more cost efficient. In addition, it does not require skilled image annotators after neural networks have been trained.

The method uses a trained deep learning model that can run automatically on large amount of image data. The cost for annotation can be essentially decreased and quality of image annotation increased with further development of the deep learning models.

A major advantage of the method described is that blade-defect determination may be done on pixel-level which provides a high accuracy.

## Claims

1. A method for computer-implemented determination of blade-defects of a wind turbine, comprising the steps of:
S1) receiving, by an interface (IF), an image (OI) of a wind turbine containing at least a part of one or more blades of the wind turbine, the image (OI) having a given original number of pixels (h, w) in height and width;
S2a) analyzing, by a processing unit (PU), the image (OI) to determine an outline of the blades in the image;
S2b) creating, by the processing unit, a modified image (AI) from the analyzed image (OI) containing image information of the blades only; and
S3) analyzing, by the processing unit (PU), the modified image (AI) to determine a blade defect (BD) and/or a blade defect type (BDT) of the blades.

2. The method according to claim 1, wherein steps S2a) and S2b) and/or S3) are carried out using a convolutional neural network (CNN) being trained with training data of manually annotated images of wind turbines.

3. The method according to claim 2, wherein the CNN conducts a global model (GM) for global image segmentation and a local model (LM) for localized refinement of the segmentation from the global model (GM).

4. The method according to claim 3, wherein, in the global model (GM) and the local model (LM), a number of predefined object classes (OCi) are assigned to pixels or blocks of pixels in an annotated image (ARI, UAI), wherein the number of object classes (OCi) relate to relevant and irrelevant image information necessary or not for determining the outline of the blades to be assessed.

5. The method according to claim 3 or 4, wherein, in the global model (GM), the received image (OI) is resized to a resized image (RI) having a smaller second number of pixels (rh, rw) in height and width as the resized image (OI) before proceeding to step S2a).

6. The method according to one of claims 3 to 5, wherein as an output of the global model (GM) to be processed in step S2b), the resized image (RI) is annotated with the predefined object classes and up-scaled to the original number of pixels (h, w).

7. The method according to one of claims 3 to 6, wherein in the local model (LM), the received image (OI) and the up-scaled and annotated resized image (UARI) is annotated with the predefined object classes (OCi), wherein the result of this processing constitutes the modified image (AI).

8. The method according to one of the preceding claims, wherein in step S3), another neural network being trained with training data of manually annotated patches of modified images (AI) is executed.

9. The method according to one of the preceding claims, wherein in step S3), the modified image (AI) is resized to a resized modified image having a smaller second number of pixels (rh, rw) in height and width as the modified image before annotating with a predefined defect class.

10. The method according to claim 8 or 9, wherein as an output, resized and annotated modified image is up-scaled to the original number of pixels (h, w).

11. Computer program product, directly loadable into the internal memory of a digital computer, comprising software code portions for performing the steps of one of the preceding claims when said product is run on a computer.

12. A system for computer-implemented determination of blade-defects of a wind turbine, comprising:
- an interface (IF) for receiving an image (OI) of a wind turbine containing at least a part of one or more blades of the wind turbine, the image having a given original number of pixels (h, w) in height and width;
- a processing unit (PU) adapted to
= analyze the image (OI) to determine an outline of the blades in the image (OI);
= create a modified image (AI) from the analyzed image (OI) containing image information of the blades only; and
= analyze the modified image (AI) to determine a blade defect (BD) and/or a blade defect type (BDT) of the blades.
